# EUROPEAN PATENT APPLICATION

(11) **EP 1 607 473 A1**
(43) Date of publication of application: **21.12.2005**
(21) Application number: 04723757.3
(22) Date of filing: 26.03.2004
(51) Int. Cl.: C12G 3/02, B04B 3/04

(54) **CONCENTRATED SAKE, METHOD FOR PRODUCING CONCENTRATED SAKE, CENTRIFUGE, AND APPARATUS FOR CONCENTRATING SAKE OR THE LIKE**

(30) Priority: 27.03.2003 JP 2003086694
(71) Applicant: Shima System Co., Ltd., Ueda-shi, Nagano 386-1102 (JP)
(72) Inventor: SHIMA, Yoshiharu, c/o Shima System Co., Ltd., Ueda-shi, Nagano 3861102 (JP); TSUCHIDA, Makio, c/o Shima System Co., Ltd., Ueda-shi, Nagano 3861102 (JP); SHIMIZU, Yasuo, c/o Shima System Co., Ltd., Ueda-shi, Nagano 3861102 (JP)
(74) Representative: Gill, Stephen Charles
(86) International application number: PCT/JP2004/004292
(87) International publication number: WO 2004/085605

(57) **Abstract**

For the purpose of providing sake concentrated by a high concentration ratio to an alcoholicity larger than or equal to 30 degrees, a manufacturing method for concentrated sake, a centrifugal separator and a manufacturing apparatus of liquor in order to enable high-quality aging at room temperature, sake concentrated to an alcoholicity of 30 - 50 degrees by freezing the same uniformly and then separating the water content is **characterized in that** the concentration ratio is higher than or equal to 1.59 times.

## Description

### Technical Field

The present invention relates to concentrated sake, a manufacturing method for concentrated sake and a concentrator of liquor, and in particular to concentrated sake from which the water content is substantially removed selectively without damaging the intrinsic components of sake, a manufacturing method thereof, a centrifugal separator and a concentrator of liquor.

### Background Art

In general, it is said that liquor aged for a long period of time becomes mild in taste and drinkable. A long-time aged sake of 3 - 30 years is also commercially available. However, sake has been originally considered unsuitable for long-time aging.

One of the reasons that sake has been considered unsuitable for long-time aging is that sake made of pure rice only has an alcohol concentration lower than or equal to 20 degrees (approximately 18 degrees) . That is, if the conditions such as low acidity or remaining nutrients for growing bacteria are met while sake having a low alcohol concentration is stored at room temperature for aging, putrefactive bacteria (a type of lactic acid bacteria) breeds, making sake cloudy.

Incidentally, in the manufacturing process of sake, so-called pasteurization of heating sake at 60 - 65°C is sometimes performed in order to prevent breeding of the putrefactive bacteria and germs and to prevent deterioration with age by deactivation of enzymes.

Moreover, although there is a method for adding brewing alcohol in order to increase the alcoholicity, the brewing alcohol does not undergo much aging with age and the stimulative sensation does not disappear over time, and therefore it is impossible to promote high-quality aging.

Additionally, some liquors to be aged such as whiskey or distilled spirits have a high alcohol concentration higher than or equal to 30 degrees.

Therefore, a suggested method for long-time aging of sake is to increase the alcohol concentration by concentration. The following methods are known, for example, as a method for concentrating sake.

According to a method described in Patent Document 1 (Japanese Published Unexamined Patent Application No. Sho-56-45185 (see Claims, the tenth to fourteenth lines on page 8, and the like)), refined sake (sake) is frozen slowly and completely by appropriate freezing means to a temperature lower than or equal to approximately -20°C (temperature lower than or equal to the freezing point of refined sake) for a long time, e.g. for two days, and then is fused. With such a method, it is possible to obtain concentrated sake having an alcohol concentration of 25.6 degrees from, for example, refined sake having an alcohol concentration of 20.3 degrees.

Moreover, according to a method described in Patent Document 2 (Japanese Published Unexamined Patent Application No. Sho-57-47472 (see Claims, pages 2 to 3, Example 3, and the like)), the cooling rate is derived by a constant relation decided from the alcohol content of obj ect liquor, and the liquor is frozen partially at the cooling rate and separated into cryohydrate and residual liquid content (concentrated sake) . With such a method, it is possible to obtain concentrated sake of 6.1L having a high alcoholicity of 31.5 degrees from refined sake (raw sake) of 10L having an alcoholicity of 21.6 degrees. In this case, the concentration ratio becomes 1.46 times.

With the method described in Patent Document 1 , however, sake having an alcohol concentration higher than or equal to 30 degrees cannot be obtained although it is possible to increase the alcohol concentration in comparison with refined sake which is the raw material.

Moreover, although sake which undergoes a so-called pasteurization process rarely decays or changes in quality even when being stored at room temperature, high-quality aging cannot be expected since enzymes are deactivated.

With the method described in the Patent Document 2, sake having an alcoholicity larger than or equal to 30 degrees can be obtained only when refined sake, which is the raw material, has an alcoholicity higher than or equal to 20 degrees, and concentrated sake having an alcoholicity higher than or equal to 30 degrees cannot be obtained from refined sake having an alcoholicity lower than or equal to 20 degrees. When raw sake has an alcoholicity of 18 degrees, for example, provided is 18×1.46 (concentration ratio) = 26.3 %, and there has been a need for improvement in this regard. It should be noted that it was impossible to lower the freezing temperature to -20°C in this method since the refined sake, which is the raw material, is not frozen completely.

Therefore, the present invention has been made with the view to the above points, and it is an obj ect thereof to provide: sake, which is concentrated by a high concentration ratio to an alcoholicity larger than or equal to 30 degrees in order to enable high-quality aging at room temperature; a manufacturing method for concentrated sake, a centrifugal separator; and a manufacturing apparatus of liquor.

### Disclosure of the Invention

In order to achieve the above object, the invention described in Claim 1 is sake, which is concentrated to an alcoholicity of 30 - 50 degrees by freezing the same uniformly and then separating the water content, characterized in that a concentration ratio is higher than or equal to 1.59 times.

Concentrated sake described in Claim 1 is concentrated sake having an alcoholicity of 30 - 50 degrees, which is obtained by freezing sake that is the raw material uniformly and then separating the water content at a temperature close to the freezing temperature. Since sake obtained in such a manner has a concentration ratio higher than or equal to 1.59 times and an alcoholicity larger than or equal to 30 degrees, high-quality aging at room temperature is enabled.

The term "sake" to be used in the present specification is synonymous with refined sake, and will be hereinafter referred to as sake in the present specification.

The invention described in Claim 2 is a manufacturing method for sake which is concentrated to an alcoholicity of 30 - 50 degrees by a ratio higher than or equal to 1.59 times without damaging intrinsic components of sake, characterized by comprising the steps of (a) freezing the sake by cooling the same uniformly to a predetermined temperature between -20°C and -40°C and (b) separating the frozen sake forcibly into water content and concentrated sake at a temperature higher than or equal to the predetermined temperature.

With the manufacturing method for concentrated sake described in Claim 2, sake is frozen uniformly at a predetermined temperature between -20°C and -40°C and then water content is separated forcibly at a separation temperature higher than or equal to the predetermined temperature, so that sake which is concentrated to an alcoholicity of 30 - 50 degrees can be manufactured.

It should be noted that the term "predetermined temperature" is a temperature between -20°C and -40°C, which may be arbitrarily modified depending on the alcohol concentration of sake that is the raw material, and the like. Moreover, the term "intrinsic components of sake" means components such as enzymes, amino-acids and sugars. Accordingly, "without damaging intrinsic components of sake" means that particular components among these components are substantially kept from flowing out to the water content side during separation of sake into a concentrated content side and a water content side.

Furthermore, "to separate forcibly" means, for example, centrifugal separation, separation by a compressor, separation by ultrasonic wave or the like. The same terms have the same meaning hereinafter.

The invention described in Claim 3 is the manufacturing method for concentrated sake according to Claim 2, characterized in that the sake is cooled quickly in a thin layer state in cooling atmosphere of a predetermined temperature between -20°C and -40°C.

With the manufacturing method for concentrated sake described in Claim 3, since sake is frozen in a thin layer state at a predetermined temperature between -20°C and -40°C, uniform freezing can be achieved. Here, the "thin layer state" means to have a depth (thickness) of 3 mm - 15 mm.

The invention described in Claim 4 is the manufacturing method for concentrated sake according to Claim 2, characterized in that the sake is cooled slowly at a cooling rate of 0.5 - 2 °C/h to a predetermined temperature between -20°C and -40°C.

With the manufacturing method for concentrated sake described in Claim 4, since slow cooling is employed, the recovery factor of alcohol, extract content and the like is high and it is possible to obtain high-quality concentrated sake.

The invention described in Claim 5 is the manufacturing method for concentrated sake according to any one of Claims 2 to 4, characterized in that the frozen sake is separated into the water content and the concentrated sake by centrifugal separation.

With the manufacturing method for concentrated sake described in Claim 5, since sake can be separated into water content and concentrated sake by the effect of centrifugal separation, separation can be promoted more efficiently than by spontaneous separation.

The invention described in Claim 6 is a centrifugal separator for an obj ect to be treated for separating the obj ect to be treated into a solid body and liquid, characterized by comprising: a motor; an internal basket which has large diameter pores at the outer periphery and has a spiral edge; an external basket which has small diameter pores at the outer periphery and is arranged outside the internal basket; a housing container for housing the external basket and the internal basket; a solid outlet which is provided in the vicinity of a side face upper portion of the external basket; and a rotation transmitting mechanism for transmitting rotation respectively to the external basket and the internal basket while varying a rotation transmission ratio of the motor, wherein the obj ect to be treated introduced to the internal basket is discharged from the large diameter pores to the external basket, the solid body extracted from the object to be treated is conveyed at the edge of the internal basket to an upper portion and discharged from the solid outlet to the outside at the external basket, and liquid extracted from the object to be treated is discharged from the small diameter pores to the housing container.

With the centrifugal separator for an obj ect to be treated described in Claim 6, the object to be treated is discharged from the large diameter pores to the external basket side by the effect of centrifugal separation in the internal basket to be rotated by drive of the motor. Moreover, solid-liquid separation is also promoted by the effect of centrifugal separation in the external basket. The separated solid body is conveyed upward in the external basket by the edge of the internal basket and discharged from the solid outlet to the outside. Moreover, the separated liquid part is discharged from the small diameter pores to the outside of the external basket as a concentrated object to be treated.

The invention described in Claim 7 is a centrifugal separator for an obj ect to be treated for separating the object to be treated into solid body and liquid, characterized by comprising: two motors; an internal basket which has large diameter pores at the outer periphery and has a spiral edge; an external basket which has small diameter pores at the outer periphery and is arranged outside the internal basket; a housing container for housing the external basket and the internal basket; a solid outlet which is provided in the vicinity of a side face upper portion of the external basket; a first rotation transmitting mechanism for transmitting rotation of one motor to the external basket; and a second rotation transmitting mechanism for transmitting rotation of the other motor to the internal basket, wherein the object to be treated introduced to the internal basket is discharged from the large diameter pores to the external basket, the solid body extracted from the object to be treated is conveyed at the edge of the internal basket to an upper portion and discharged from the solid outlet to the outside at the external basket, and liquid extracted from the object to be treated is discharged from the small diameter pores to the housing container.

With the centrifugal separator for an obj ect to be treated described in Claim 7, the object to be treated is discharged from the large diameter pores to the external basket side by the effect of centrifugal separation in the internal basket to be rotated by drive of one motor via the first rotation transmitting mechanism. Moreover, solid-liquid separation is also promoted by the effect of centrifugal separation in the external basket rotated by drive of the other motor via the second rotation transmitting mechanism. The separated solid body is conveyed upward in the external basket by the edge of the internal basket and discharged from the solid outlet to the outside. Moreover, the separated liquid part is discharged from the small diameter pores to the outside of the external basket as a concentrated object to be treated. It should be noted that the rotation of the external basket and the internal basket may be a rotation at an equal rate or rotation at a differential rate. Since the internal basket and the external basket are driven by different motors, it is possible to control the respective rotation easily and to simplify the structure of the rotation transmitting mechanisms.

The invention described in Claim 8 is a concentrator of liquor, characterized by comprising: a freezing chamber which has a liquor inlet and has cooling means for cooling liquor to a predetermined temperature for freezing; and a solid-liquid separation chamber, which has a centrifugal separator for separating the liquor frozen at the freezing chamber into water content and concentrated liquor, for maintaining a temperature of the centrifugal separator at close to or equal to a predetermined temperature.

The concentrator of liquor described in Claim 8 is an apparatus for realizing the manufacturing method for the concentrated sake. It is possible to freeze liquor at the freezing chamber and to separate frozen liquor into ice composed of water content and concentrated liquor by the centrifugal separator.

The invention described in Claim 9 is the concentrator of liquor according to Claim 8, characterized in that the freezing chamber has: a tray for storing the liquor; conveying means for conveying the tray; and detaching means for detaching the frozen liquor from the conveyed tray.

With the concentrator of liquor described in Claim 9, since liquor is conveyed in the freezing chamber, it is possible to promote freezing in the meantime. Moreover, since sake frozen on the tray can be detached by the detaching means, manual work is not included and the apparatus is suitable for industrial production. Furthermore, the concentrator of liquor described in Claim 9 can be used for the manufacturing method for sake described in Claim 3 by sequentially supplying liquor to the conveyed tray in a thin film state (having a thickness of 3 mm - 15 mm). Moreover, the apparatus can be used for the manufacturing method for sake described in Claim 4 by supplying liquor to all trays to have a large thickness (thickness of 20 mm - 40 mm), once stopping conveyance and cooling liquor at a predetermined cooling rate.

The invention described in Claim 10 is the concentrator of liquor according to Claim 9, characterized by having a cover for sealing the tray, wherein a partition plate for partitioning the tray into a plurality of partitions is formed inside the cover.

With the concentrator of liquor described in Claim 10, since the partition plate partitions the tray into a plurality of partitions, the cooling effect is enhanced and it is possible to freeze sake stored in the tray quickly and uniformly. Moreover, since the partition plate partitions the tray into a plurality of partitions, the sealing level is enhanced. Furthermore, the frozen sake detached from the tray, which has a small block-like shape, can be supplied to the centrifugal separator easily.

The invention described in Claim 11 is the concentrator of liquor according to Clam 8, characterized in that the freezing chamber has: an external cylinder having the liquor inlet at one end portion; an internal cylinder which is provided inside the external cylinder and has a spiral edge at the outer periphery; and a motor for rotating the internal cylinder, and the internal cylinder is rotated by drive of the motor so that the liquor introduced from the liquor inlet to a space between the external cylinder and the internal cylinder can be discharged from the other end portion of the external cylinder.

With the concentrator of liquor described in Claim 11, the internal cylinder having a spiral edge at the outer periphery is rotated, so that liquor introduced from the liquor inlet provided at one end portion to the space between the external cylinder and the internal cylinder can be moved toward the other end portion. Sake is frozen in the meantime and frozen sake can be discharged automatically from the other end portion. With such a manner, it is possible to utilize the space in the freezing chamber effectively and to form a small freezing chamber.

The invention described in Claim 12 is a concentrator of liquor comprising: storing means for storing liquor in a solid-liquid separation chamber maintained at a predetermined temperature; antifreezing solution cooled to a predetermined temperature, for soaking the storing means and freezing liquor; and a centrifugal separator for separating the liquor frozen by the antifreezing solution into water content and concentrated liquor, characterized in that the storing means has: an external cylinder having a liquor inlet at one end portion; an internal cylinder which is provided inside the external cylinder and has a spiral edge at the outer periphery; and a motor for rotating the internal cylinder, and the internal cylinder is rotated by drive of the motor so that the liquor introduced from the liquor inlet to a space between the external cylinder and the internal cylinder can be discharged from the other end portion of the external cylinder.

With the concentrator of liquor described in Claim 12, the storing means rotates the internal cylinder having a spiral edge at the outer periphery so as to move liquor, which is introduced from the liquor inlet provided at one end portion to the space between the external cylinder and the internal cylinder, toward the other end portion. The outside of the external cylinder and the inside of the internal cylinder of the storing means are soaked in the antifreezing solution cooled to a predetermined temperature, so that liquor is frozen in a short period of time while moving in the storing means and frozen liquor can be discharged automatically from the other end portion. In the solid-liquid separation chamber maintained at a predetermined temperature, liquor discharged automatically is separated into water content and concentrated liquor by the centrifugal separator.

Here, the "predetermined temperature" is a temperature in the solid-liquid separation chamber, close to the "predetermined temperature" of the antifreezing solution.

The invention described in Claim 13 is the concentrator of liquor according to any one of Claims 8 to 12, characterized in that the centrifugal separator comprises: amotor; an internal basket which has large diameter pores at the outer periphery and has a spiral edge; an external basket which has small diameter pores at the outer periphery and is arranged outside the internal basket; a housing container for housing the external basket and the internal basket; a solid outlet which is provided in the vicinity of a side face upper portion of the external basket; and a rotation transmitting mechanism for transmitting rotation respectively to the external basket and the internal basket while varying a rotation transmission ratio of the motor, the liquor introduced to the internal basket is discharged from the large diameter pores to the external basket, and the external basket has a number of rotations different from rotation of the internal basket so that the solid body extracted from the liquor can be conveyed at the edge to an upper portion and discharged from the solid outlet to the outside.

With the concentrator of liquor described in Claim 13, frozen sake is discharged from the large diameter pores to the external basket side by the effect of centrifugal separation in the internal basket rotated by drive of the motor. Moreover, the solid-liquid separation is also promoted by the effect of centrifugal separation in the external basket. The separated solid body is conveyed by the edge upward in the external basket and discharged from the solid outlet to the outside. Moreover, the separated liquid part is discharged from the small diameter pores to the housing container side (outside of the external basket) as concentrated liquor.

Moreover, such a centrifugal separator is a novel apparatus regardless of concentration of liquor. Accordingly, the centrifugal separator described in Claim 13 can also be applied for other uses (Claim 6).

The invention described in Claim 14 is the concentrator of liquor according to any one of Claims 8 to 12, characterized in that the centrifugal separator comprises: two motors; an internal basket which has large diameter pores at the outer periphery and has a spiral edge; an external basket which has small diameter pores at the outer periphery and is arranged outside the internal basket; a housing container for housing the external basket and the internal basket; a solid outlet which is provided in the vicinity of a side face upper portion of the external basket; a first rotation transmitting mechanism for transmitting rotation of one motor to the external basket; and a second rotation transmitting mechanism for transmitting rotation of the other motor to the internal basket, the object to be treated introduced to the internal basket is discharged from the large diameter pores to the external basket, the solid body extracted from the object to be treated is conveyed at the edge of the internal basket to an upper portion and discharged from the solid outlet to the outside at the external basket, and liquid extracted from the object to be treated is discharged from the small diameter pores to the housing container.

With the concentrator of liquor described in Claim 14, frozen sake is discharged from the large diameter pores to the external basket side by the effect of centrifugal separation in the internal basket which is rotated by drive of one motor via the first rotation transmitting mechanism. Moreover, the solid-liquid separation is also promoted by the effect of centrifugal separation in the external basket which is rotated by drive of the other motor via the second rotation transmitting mechanism. The separated solid body is conveyed by the edge upward in the external basket and discharged from the solid outlet to the outside. Moreover, the separated liquid part is discharged from the small diameter pores to the housing container side (outside of the external basket) as concentrated liquor.

It should be noted that rotation of the internal basket and the external basket may be a rotation at an equal rate or rotation at a differential rate. Since the internal basket and the external basket are driven by different motors, it is possible to control the respective rotation easily and to simplify the structure of the rotation transmitting mechanisms.

Moreover, such a centrifugal separator is a novel apparatus regardless of concentration of liquor. Accordingly, the centrifugal separator described in Claim 14 can also be applied for other uses (Claim 7).

### Brief Description of the Drawings

Fig. 1 is a view showing the structure of a concentrator of sake according to the first embodiment.
Fig. 2 is a perspective view of a tray and a cover.
Fig. 3 is a front view of a separator.
Fig. 4 is a partial sectional perspective view of the separator.
Fig. 5 is a partial sectional side view of a cylinder.
Fig. 6 is a view showing the structure of a concentrator of sake according to the third embodiment.
Fig. 7 is a sectional view of a separator according to the fourth embodiment.

### Best Mode for Carrying Out the Invention

A description will be made for embodiments of a concentrator of liquor according to the present invention in detail with reference to the appropriate drawings. It is assumed that sake is applied as liquor in each embodiment to be described hereinafter.

### [First Embodiment]

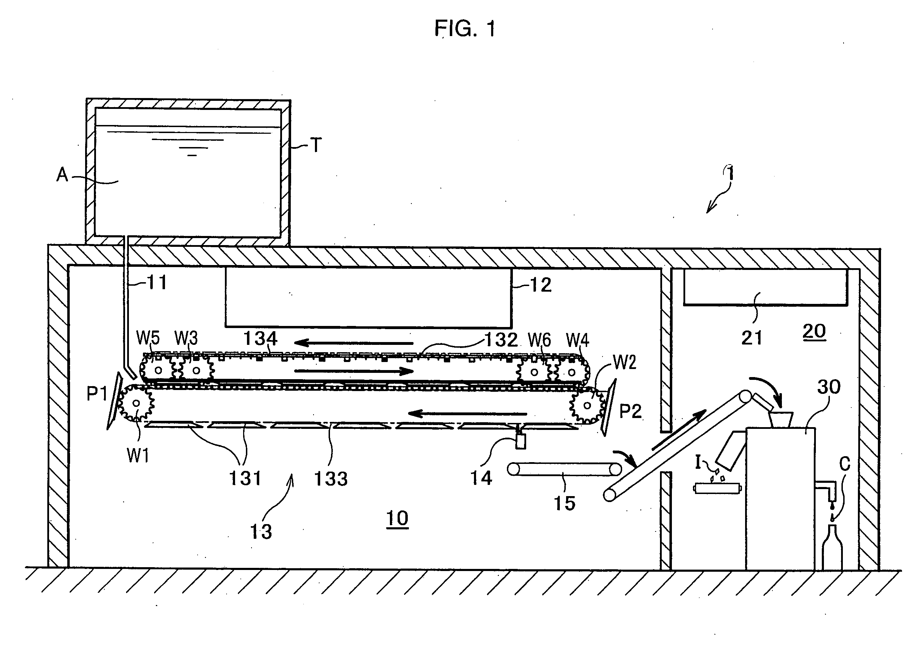

Fig. 1 is a view showing the structure of a concentrator of sake according to the first embodiment.

As shown in Fig. 1, a concentrator of sake (which will be hereinafter referred to simply as "a concentrator") 1 is composed of: a freezing chamber 10 for freezing sake A, which is the raw material, supplied from a raw material tank T; and a solid-liquid separation chamber 20 comprising a separator 30 for separating frozen sake A into ice I composed of water content and concentrated sake C.

The raw material tank T stores sake A which is the raw material. Sake A is so-called pure rice sake (including Ginjo sake, which is brewed from the finest rice), and is preferably pure sake which is not pasteurized (so-called pasteurization is generally performed twice immediately after production and immediately before bottling). This is because high-quality aging can be performed for pure sake after production since various enzymes are also kept in a high activity state.

A supply pipe (liquor inlet) 11 for supplying sake A into the freezing chamber 10 is connected with the raw material tank T.

The freezing chamber 10 is composed of: cooling means 12 for freezing supplied sake A; conveying means 13 for conveying sake A; and detaching means 14 for detaching conveyed sake A from the conveying means 13 in order to supply sake A to the separator 30. The cooling means 12 is one which can be arbitrarily controlled to cool sake A to a predetermined temperature between -10°C and -40°C, and is preferably one which can control the cooling rate arbitrarily. Since sake A is conveyed in the freezing chamber 10 having such cooling means 12 so as to gain time, sake A can be frozen reliably and uniformly. It should be noted that the frozen sake A becomes a hardened sherbet-like state.

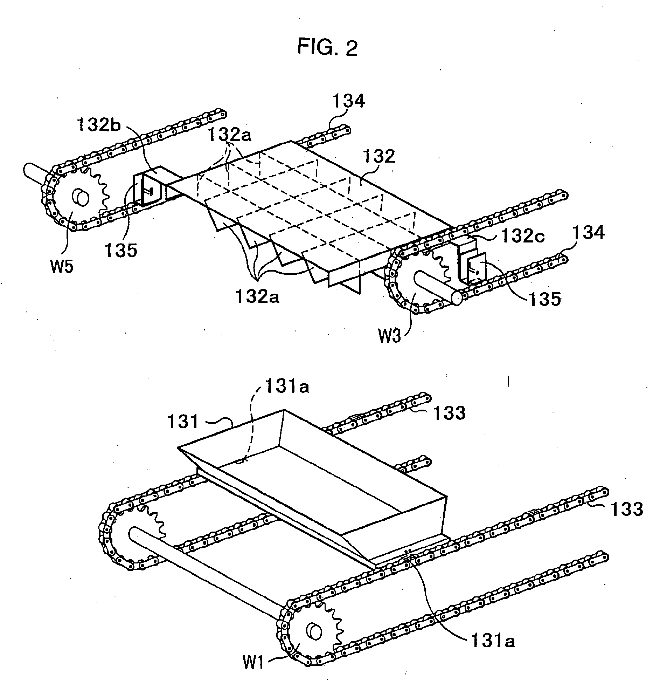

The conveying means 13 is composed of: a plurality of trays 131 to be filled with sake A; a cover 132 laid on the trays 131; chains 133 and 133 for fastening and conveying the trays 131; chains 134 and 134 for conveying the cover 132 so as to be laid on the trays 131; and sprocket wheels W in the vicinity of which the chains 133 and 134 are wound (see Fig. 2).

Fig. 2 is a perspective view of a tray 131 and the cover 132.

The tray 131 is a rectangular vessel having a depth of 10 mm - 50 mm and is used as a vessel for conveying sake A supplied from the supply pipe 11.

The cover 132 is laid on the tray 131 and is provided to seal the tray 131 and freeze supplied sake A uniformly without loosing volatile components such as alcohol. Moreover, a face (inside) of the cover 132 facing the tray 131 is provided with a plurality of partition plates 132a so as to be partitioned into a plurality of partitions. Therefore, when the cover 132 is laid on the tray 131 storing sake A, sake A can be frozen for each small block by conveying sake A in a state where the same is partitioned to a plurality of partitions on the tray 131.

Two chains 133 are provided parallel to each other, wound in the vicinity of sprocket wheels W1 and W2, and connected annularly as a whole. A plurality of trays 131 are supported and fastened by supporting portions 131a and 131a provided in the vicinity of the center of both sides of the bottom face of the trays 131 in the conveyance direction so as to be arranged between these chains 133 and 133. When the sprocket wheels W1 and W2 are rotated by a driving mechanism which is not illustrated in the figure, the chains 133 are revolved so that the trays 131 can be conveyed. The trays 131 fastened to the chains 133 are conveyed in a reversed manner when the conveyance direction of the chains 133 is changed at points P1 and P2 shown in Fig. 1.

Similarly to the chains 133, two chains 134 are provided parallel to each other, wound in the vicinity of sprocket wheels W3 and W4 (or W5 and W6), and connected annularly as a whole. These sprocket wheels W3 and W4 and the sprocket wheels W5 and W6 are arranged at positions which are shifted from each other in the conveyance direction, and the chains 134 and 134 are also arranged at positions which are shifted from each other in the conveyance direction in accordance with the positions of the sprocket wheels W4 ... (see Fig. 2). Side portions in the width direction of the cover 132 arranged at these chains 134 and 134 are provided with supporting portions 132b and 132c at positions of opposed sides shifted in the conveyance direction, and these supporting portions 132b and 132c are supported at brackets 135 and 135 fastened to the chains 134 and 134, so as to be rotatable.

When the sprocket wheels W4, W5, W6 and W7 are rotated by a driving mechanism which is not illustrated in the figure, the chains 134 and 134 are revolved so that the cover 132 can be conveyed. With such a structure, the cover which can be rotated freely with respect to the bracket 135 can be conveyed with the attitude being kept in a horizontal state even when the direction of the bracket 135 is changed according to a change in the conveyance direction at the revolving area of the chains 134 and 134.

A scraper can be used for the detaching means 14, for example. Frozen sake A can be scraped out and detached from the trays 131 by moving the scraper into the tray 131 which has been reversed at the point P2.

Incidentally, as the detaching means 14 which is supposed to only detach frozen sake A from the tray 131, an ultrasonic vibrator may also be employed, for example. With such a manner, sake A is detached from the tray 131 and falls, by giving ultrasonic vibration to the tray 131 in a reversed state by the effect of the ultrasonic vibrator.

Here, detached sake A is formed in a small block-like shape by the partition plates 132a of the cover 132, laid on a conveyer 15 or the like, and conveyed and supplied to the separator 30 of the solid-liquid separation chamber 20. Since frozen sake A is frozen into small block-like ices, it is possible to supply sake A to the separator 30 easily and to reduce time for grinding in the separator 30.

A description will be made for operation of the conveying means 13.

After sake A is supplied from the supply pipe 11 to the tray 131 at the point P1, the cover 132 fastened to the chain 134 is laid on the tray 131 and the tray 131 is conveyed to the point P2. The tray 131 and the cover 132 conveyed to the point P2 are separated into the tray 131 and the cover 132, and the cover 132 is conveyed upward with the attitude being kept in a horizontal state while the tray 131 is conveyed downward in a reversed manner. Here, frozen sake A can be detached from the reversed tray 131 by the detaching means 14 and supplied to the solid-liquid separation chamber 20 side by the conveyer 15. The tray 131 and the cover 132 from which sake A has been detached are conveyed again to the point P1 and repeat the same operations.

The solid-liquid separation chamber 20 comprises the separator 30 for performing solid-liquid separation for frozen sake A and cooling means 21 for maintaining the separator 30 at a predetermined temperature.

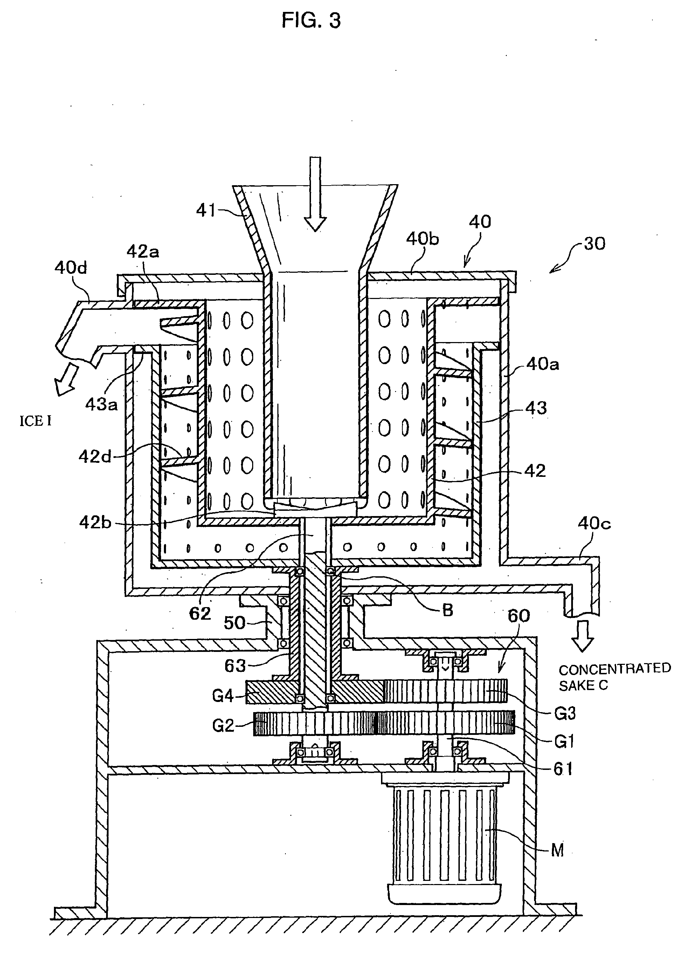

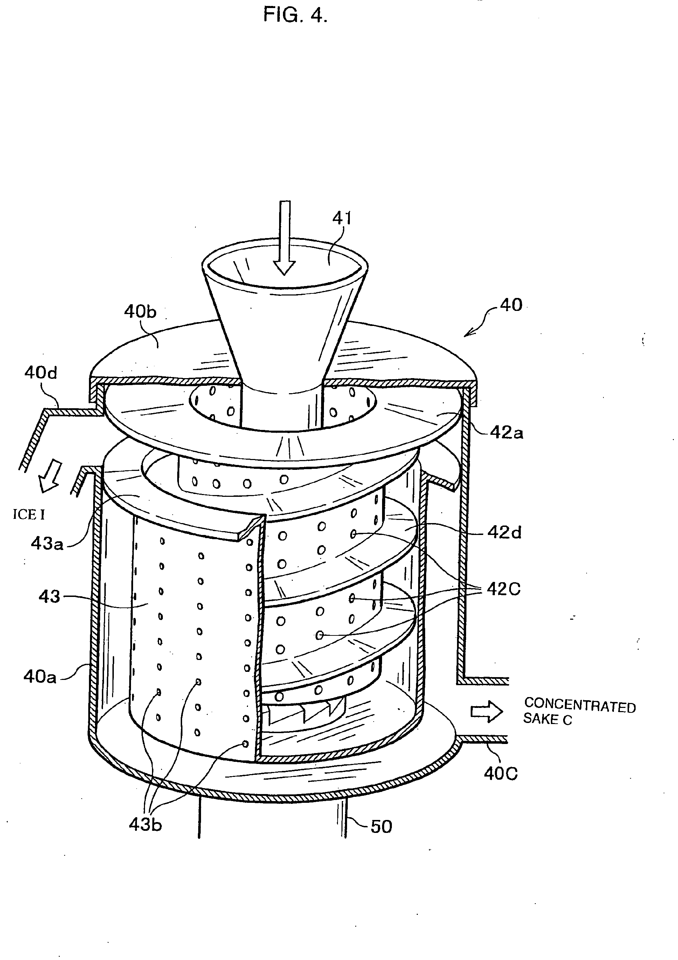

Fig. 3 is a sectional view of a separator and Fig. 4 is a partial sectional perspective view of the separator.

As shown in Fig. 3, the separator 30 is composed of a housing container 40 and a support 50 for supporting the housing container 40 and is constructed to perform solid-liquid separation into ice I and concentrated sake C utilizing a dewatering effect of centrifugal separation in the housing container 40.

The housing container 40 has a container body 40a, a container cover 40b, a liquid discharge pipe 40c arranged at a lower portion of the container body 40a, and an ice outlet 40d arranged at an upper side portion of the container body 40a.

An introduction portion 41 is arranged at the internal center of the container body 40a, an internal basket 42 is arranged outside the introduction portion 41, and an external basket 43 is arranged outside the internal basket 42. Sake A introduced from the introduction portion 41 is ground into small pieces in the internal basket 42 and discharged to the external basket 43, and only sake C concentrated in the external basket 43 is further discharged to the outside of the external basket 43, so as to be separated from ice I.

The introduction portion 41 is made of a cylindrical member and is fastened to the container cover 40b so as to be arranged at the center of the container body 40a. Since the introduction portion 41 is constructed to receive sake A which is detached by the detaching means 14 and supplied and introduce the same to the internal basket 42, a slight clearance is provided at the lower portion of the introduction portion 41 and the bottom face of the internal basket 42.

The internal basket 42 is made of material such as stainless steel (SUS) and is formed in a cylindrical shape having a bottom face, and a flange 42a is provided at the upper end portion thereof. A machined edge 42b is provided at the bottom face of the internal center of the internal basket 42 so as to grind icy sake A introduced from the introduction portion 41 into small pieces. Moreover, a plurality of pores 42c (see Fig. 3) having a diameter of approximately 10 mm are provided at the side face of the internal basket 42 so as to discharge ground small ice I of sake A to the outside, i. e. to the external basket 43 side which will be described later. Furthermore, a spiral edge 42d is formed at the outer side face of the internal basket 42.

The external basket 43 made of, for example, stainless steel or the like is arranged outside the internal basket 42 so that a slight clearance is provided between the internal basket 42 and the edge 42d. The external basket 43 similarly has a cylindrical shape having a bottom face, and a flange 43a is provided at the upper portion thereof. Pores 43b having a diameter smaller than or equal to 1.0 mm, or preferably a diameter of approximately 0.05 mm, are provided at the side face of the external basket 43 so as to discharge concentrated sake C separated from ice I to the housing container 40 side. It should be noted that the size of the pores 42c and 43b to be provided at the side face of the internal basket 42 and the external basket 43 is not limited to the above diameter and arbitrary modification can be made, as long as the pores 42c are the larger.

The support 50 is fastened to the lower portion of the housing container 40, and includes a motor M and a rotation transmitting mechanism 60 for varying the rotational speed of the motor M and transmitting rotation to the internal basket 42 or the external basket 43.

The rotation transmitting mechanism 60 has a rotation transmitting shaft 61 connected directly with the rotating shaft of the motor M, and comprises an internal basket rotating shaft 62 fastened to the internal basket 42 , a gear G1, which is provided at the rotation transmitting shaft 61, for transmitting rotation thereof to the internal basket 42, and a gear G2 attached to the internal basket rotating shaft 62, as a mechanism for transmitting rotation to the internal basket 42. Moreover, the rotation transmitting mechanism 60 comprises an external basket rotating shaft 63 fastened to the external basket 43, a gear G3, which is provided at the rotation transmitting shaft 61, for transmitting rotation thereof to the external basket 43 and a gear G4 attached to the external basket rotating shaft 63. The external basket rotating shaft 63 is provided so as to be fit in the internal basket rotating shaft 62 via a bearing B and is constructed to transmit different rotation by changing the number of teeth of the gears G1 - G4. Here, the internal basket 42 and the external basket 43 have a different number of rotations depending on the ratio of the number of teeth of the respective gears G1 - G4. Since the internal basket 42 and the external basket 43 have a different number of rotations, ice I of sake A discharged from the pores 42c of the internal basket 42 can be moved upward at the edge 42d in the external basket 43 and discharged from the ice outlet 40d via the flange 43a.

A description will be made for the operation of the separator 30 constructed as described above.

First, the motor M is driven, and sake A frozen at the freezing chamber 10 is introduced from the introduction portion 41 while the internal basket 42 and the external basket 43 are rotated. Introduced sake A is ground by the machined edge 42b in the rotated internal basket 42 and discharged from the pores 42c to the external basket 43 side. In the external basket 43, ice I is conveyed upward by the edge 42d and discharged from the ice outlet 40d while sake C concentrated by centrifugal separation is discharged from the pores 43b to the housing container 40 side and discharged finally from the liquid discharge pipe 40c.

### <Manufacturing method>

Next, a manufacturing method for concentrated sake using the concentrator 1 will be described with reference to Fig. 1 to Fig. 3.

### (Freezing Process)

First, in a manufacturing method for concentrated sake of the present invention, sake is frozen uniformly to a predetermined temperature (between -20°C and -40°C, or preferably -25°C and -40°C) .

In the apparatus illustrated in the figure, sake A is frozen in the freezing chamber 10 while being conveyed by the conveying means 13. In the present invention, sake A needs to be frozen uniformly to a predetermined temperature between -20°C and -40°C.

That is, it has been found experimentally that concentrated sake C having a target alcoholicity larger than or equal to 30 degrees (for example, the alcoholicity after concentration becomes 30 degrees when the alcoholicity of raw material sake is 18 degrees and the concentration ratio is 1.67) cannot be manufactured when the freezing temperature in this freezing process is lower than -20°C or sake A is frozen nonuniformly. The upper limit was set to -40°C with a view to the cooling capacity and practical alcoholicity.

Concretely, in the cooling means 12, a temperature in the freezing chamber 10 is set to a predetermined temperature between -20°C and -40°C, the tray 131 is filled with sake A in a thin layer state (having a depth of 5 mm, for example) and sake A is frozen quickly in a short period of time while being conveyed by the conveying means 13. The point of such a freezing method is to cool the outer periphery portion and the center portion of sake A, which is the raw material, uniformly from the standpoint of the alcohol recovery factor and ensuring of quality of the product, and sake A frozen in such a manner becomes a uniform sherbet-like state. Incidentally, sake A is filled in a laminar state in order to freeze the same at a uniform freezing temperature.

### (Separation Process)

Next, in the method of the present invention, solid-liquid separation is performed for frozen sake to separate the same into concentrated sake and water content.

In the apparatus illustrated in the figure, frozen sake A is detached from the tray 131 by the detaching means 14, introduced to the introduction portion 41 of the separator 30 and separated into a liquid part and a solid part. The separated liquid part is the target concentrated sake C and the solid part is ice composed mainly of water content. The solid-liquid separation chamber 20 in which the separator 30 is laid is set to have a temperature substantially equal to the freezing chamber 10. It should be noted that the freezing temperature in this freezing chamber 10 and the initial temperature of the solid-liquid separation chamber 20 in solid-liquid separation greatly affect the quality of the product, the concentration ratio of alcohol, extract content and the like, and the alcohol recovery factor.

Concretely, introduced sake A is ground in the internal basket 42 into small pieces, passes through the pores 42c and is discharged to the external basket 43 side. At the external basket 43, ice I which does not pass through the pores 43b is conveyed upward at the edge 42d and discharged from the ice outlet 40d to the outside of the housing container 40 while the liquid part which has passed through the pores 43b is discharged from the liquid discharge pipe 40c as concentrated sake C.

With the concentrator 1 constructed as described above, the following effects can be obtained.

Since sake A is filled on the tray 131 of the conveying means 13 at the freezing chamber 10 and is frozen while being conveyed, the production efficiency is high and the apparatus is suitable for industrial production.

Moreover, since sake A can be detached from the tray 131 by the detaching means 14 and conveyed to the separator 30 by a conveyer or the like, the process can be performed efficiently without manual operation.

Furthermore, solid-liquid separation can be performed utilizing a dewatering effect of centrifugal separation at the separator 30 and ice I and the like can be discharged to the outside automatically and successively, the production efficiency is high and the apparatus is suitable for use in an automatic process.

In concentrated sake C obtained as described above, the components which are originally included in sake, such as alcohol, sugars, amino-acids and enzymes, are concentrated by 1.5 times or more.

Sake C obtained as described above, which has a high alcoholicity larger than or equal to 30 degrees, can be stored (aged) at room temperature without deterioration. Moreover, since sake C is stored at room temperature, the progress of aging can be hastened.

Furthermore, concentrated sake C, for which sake made of raw material sake that is not pasteurized is used, also enzyme activity is high and high-quality aging (for example, mild taste, pleasant flavor, little stimulation of alcohol, and the like) can be performed.

Although an example of a preferable embodiment of the present invention has been described, the present invention is not limited to the embodiment and the design may be modified arbitrarily without departing from the scope of the invention.

For example, although the depth of the tray 131 in the present embodiment is 10 mm - 50 mm, the invention is not limited to this and the design can be modified appropriately. For example, more sake A can be filled by forming the tray 131 deeper. In such a manner, a larger amount of sake can be frozen.

Moreover, although the tray 131 and the cover 132 in the present embodiment are respectively fastened to the chain 133 at the conveying means 13 so that both members are united, the present invention is not limited to this and the cover can be attached directly to the tray 131, for example. Insuchamanner, the structure can be further simplified.

Furthermore, although the chains 133 and 134 of the conveying means in the present embodiment are respectively formed in a simple annular shape so that sake A is filled only in one stage, a plurality of stages to be filled with sake A may be constructed. With such a structure, it is possible to enhance the space efficiency in the freezing chamber 10 and to increase the amount of sake A to be conveyed, and therefore superior mass productivity can be provided.

### [Second Embodiment]

The second embodiment of the present invention will be described in detail with reference to the appropriate drawings. It should be noted that, since the second embodiment has a structure partially modified from that of the first embodiment, the same symbols are used to refer to same components and description thereof will be omitted.

A concentrator of sake (which will be hereinafter referred to simply as "a concentrator") according to the present embodiment is composed of: a freezing chamber 10 for freezing sake A, which is the raw material, supplied from a raw material tank T; and a solid-liquid separation chamber 20 which comprises a separator 30 for separating frozen sake A into ice I composed of water content and concentrated sake C (see Fig. 1).

The freezing chamber 10 has a cylinder for conveying sake A from one end to the other end therein and cooling member 12 for cooling the cylinder 70. This cylinder 70 functions as the conveying means 13, the detaching means 14 and the conveyer 15 of the first embodiment.

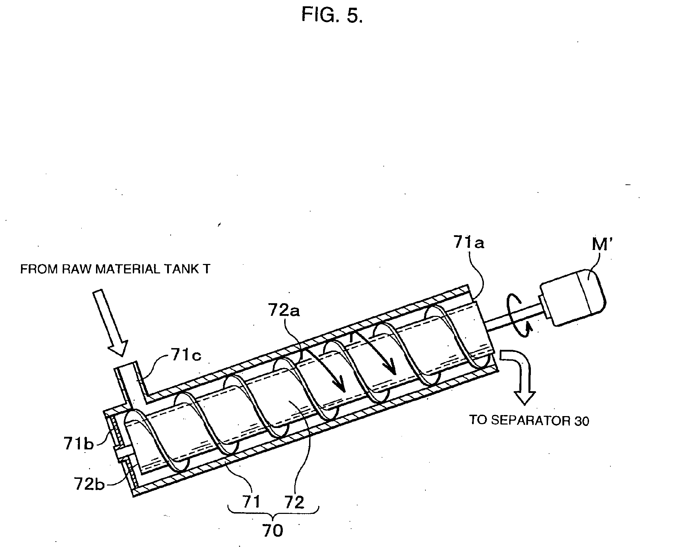

Fig. 5 is a sectional view of a cylinder.

As shown in Fig. 5, the cylinder 70 is composed of: an external cylinder 71 having an opened side; an internal cylinder 72 arranged inside the external cylinder 71; and a motor M' for rotating the internal cylinder 72.

The external cylinder 71 is hollow, and one of the end portions thereof is an open end 71a while the other is provided with a bottom face 71b, which is a closed end. A liquor inlet 71c is formed in the vicinity of an end portion at the bottom face 71b side so that sake A can be introduced to the inside of the external cylinder 71 from the raw material tank T via the liquor inlet 71c.

The external cylinder 71 is arranged in the freezing chamber 10 so as to be tilted by approximately 15 - 45 ° with respect to the horizontal direction so that the open end 71a is faced upward and an introduction portion 41 of the separator 30 is arranged below the open end 71a.

The internal cylinder 72 is hollow, has a spiral edge 72a at the outer periphery face and is connected with the motor M' so as to be rotated in the axial direction. Moreover, a bottom face 72b is formed at the lower end side thereof so as to support the rotating shaft of the motor M'. It should be noted that the cooling efficiency can be enhanced when cooled air from the cooling means 12 is circulated also to the inside of the internal cylinder 72.

At the cylinder 70 constructed as described above, sake A is introduced from the liquor inlet 71c to the space between the external cylinder 71 and the internal cylinder 72. An edge 72a of the internal cylinder 72 rotated in the axial direction by drive of the motor M' conveys sake A upward. The cylinder 70 arranged in the freezing chamber 10 is cooled by the cooling means 12 from outside of the external cylinder 71. Moreover, the cylinder 70 can also be cooled from the inside of the internal cylinder 72 when cooled air is circulated also to the inside of the internal cylinder 72. Therefore, sake A is discharged from the open end 71a to the outside (introduction portion 41 side of the separator 30) while being frozen (freezing process) quickly during conveyance. It should be noted that the separationeffect (separationprocess) of sake A at the separator 30 is the same as the first embodiment and overlapping description thereof will be omitted here.

With the concentrator constructed as described above, the following effects can be obtained.

With the cylinder 70, sake A can be conveyed from one end side (liquor inlet 71c) to the other side (open end 71a) by rotating the motor M' and sake A can be frozen utilizing the conveyance time. It is therefore possible to introduce sake A into the cylinder 70 sequentially, to freeze sake A successively and to enhance the production efficiency, and the apparatus is also suitable for industrial production.

Moreover, sake A discharged from the open end of the external cylinder 71 is introduced directly to the introduction portion 41 of the separator 30 arranged below. Therefore, frozen sake A can be supplied to the separator 30 successively from the cylinder 70 and the apparatus can be applied to an automatic process.

In concentrated sake C obtained as described above, the components which are originally included in sake, such as alcohol, extract contents, enzymes, amino-acids and flavor components, are concentrated by 1.5 times to 2 times or more.

Moreover, sake C obtained as described above, which has a high alcoholicity, can be stored (aged) withoutdeterioration. Moreover, since sake C is stored at room temperature, the progress of aging can be hastened.

Furthermore, concentrated sake C, for which sake made of raw material sake that is not pasteurized is used, also enzyme activity is high and high-quality (for example, mild taste, pleasant flavor, little stimulation of alcohol, and the like) aging can be performed.

Although an embodiment of the present invention has been described, the present invention may be implemented in any of the following forms.

For example, although an example in which only one cylinder 70 is employed has been described in the present embodiment, the present invention is not limited to this and a plurality of cylinders may be constructed. In such a manner, the production efficiency can be further enhanced.

Moreover, for example, although sake is applied as the raw material in the concentrator 1 of the above embodiment, the present invention is not limited to this and any type of liquors (such as beer, liqueur or rum) may be applied.

It should be noted that, although concentrated sake manufactured using a concentrator and a manufacturing method thereof have been described in the above embodiment, any sake manufactured by the same method without using a concentrator and any manufacturing method including the method implemented in the same form belong to the technical scope of the present invention.

Although sake A in the above embodiment is cooled uniformly and quickly to a predetermined temperature between -20°C and -40°C in the freezing process, the present invention is not limited to this and the temperature of the freezing chamber may be controlled to a predetermined temperature, for example, so that sake A is cooled slowly at a cooling rate of 0.5 - 2.0°C per hour. With such a manner, although the time required until freezing completion is longer than the above embodiment, it has been found in an example that the recovery factor of alcohol, extract component and the like is high and high-quality concentrated sake is obtained.

### [Third Embodiment]

The third embodiment of the present invention will be described in detail with reference to the appropriate drawings. It should be noted that, since the structure of the third embodiment is partially modified from that of the second embodiment, the same symbols are used to refer to the same components and description thereof will be omitted.

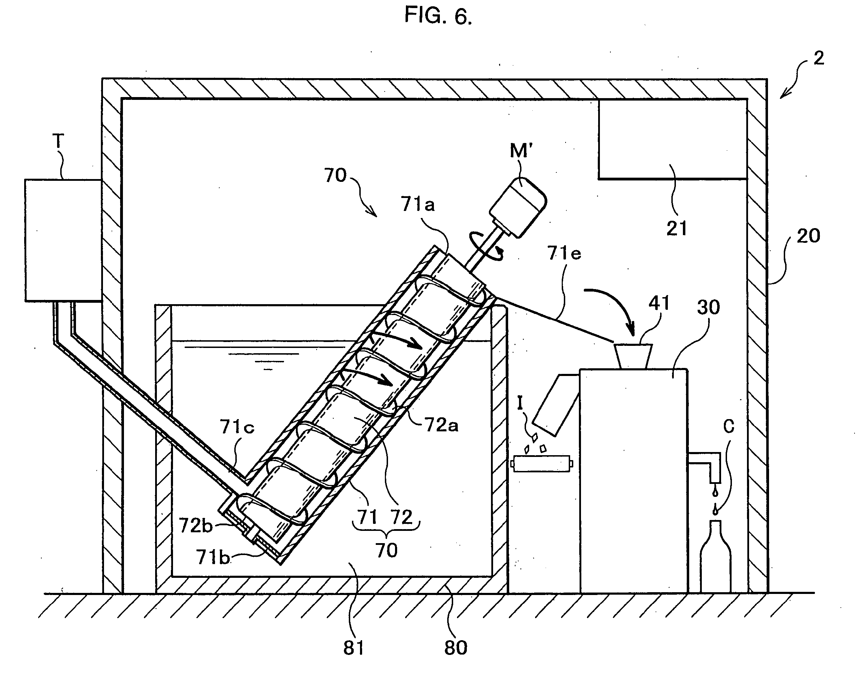

Fig. 6 is a view showing the structure of a concentrator of sake according to the third embodiment.

A concentrator 2 of sake (which will be hereinafter referred to simply as "a concentrator") according to the present embodiment is composed of: a cylinder (storing means) 70 for conveying sake A, which is the raw material, supplied from a raw material tank T at the inside thereof; antifreezing solution 81 to be reserved in a reservoir 80; and a separator 30 for separating sake A discharged from the cylinder 70 into ice I composed of water content and concentrated sake C, in a solid-liquid separation chamber 20.

The cylinder 70 is arranged in the reservoir 80 and cooled by the antifreezing 81 which will be described later from outside of an eternal cylinder 71 and inside of an internal cylinder 72 (see Fig. 5). When the cylinder 70 is cooled, sake A introduced from a liquor inlet 71c to the space between the external cylinder 71 and the internal cylinder 72 is frozen while being conveyed to an open end 71a.

The external cylinder 71 is arranged in the reservoir 80 so as to be tilted by approximately 15 - 45° with respect to the horizontal direction so that the open end 71a is faced upward and a slope 71e is formed in succession from the open end 71a to an introduction portion 41 of the separator 30.

The antifreezing solution 81 is reserved in the reservoir 80 and the cylinder 70 is dipped therein. Moreover, the antifreezing solution 81 may be circulated inside the internal cylinder 72. The antifreezing solution 81 is cooled to, for example, -40°C in order to freeze sake A at a predetermined temperature.

Moreover, the temperature of the solid-liquid separation chamber 20 is maintained at a temperature close to the freezing temperature mentioned above, for example, -35 °C, by the cooling means 21.

At the cylinder 70 constructed as described above, sake A is introduced from the liquor inlet 71c to the space between the external cylinder 71 and the internal cylinder 72. An edge 72a of the internal cylinder 72 rotated in the axial direction by drive of a motor M' conveys sake A upward. The cylinder 70 dipped in the antifreezing solution 81 is cooled by the antifreezing solution 81 from outside of the external cylinder 71. Moreover, the cooling efficiency can be further enhanced when the antifreezing solution 81 is circulated also to the inside of the internal cylinder 72. Therefore, sake A is discharged from the open end 71a via the slope 71e to the outside (introduction portion 41 side of the separator 30) while being frozen(freezing process) quickly during conveyance. It should be noted that the separation effect (separating process) of sake A at the separator 30 is the same as the first embodiment and overlapping description thereof will be omitted here.

With the concentrator 2 constructed as described above, the following effects can be obtained.

With the cylinder 70, sake A can be conveyed from one end side (liquor inlet 71c) to the other end side (open end 71a) by rotating the motor M' and sake A can be frozen utilizing the conveyance time (short time). It is therefore possible to introduce sake A into the cylinder 70 sequentially, to freeze sake A successively and to enhance the production efficiency, and the apparatus is also suitable for industrial production.

Moreover, sake A discharged from the open end of the external cylinder 71 is introduced directly to the introduction portion 41 of the separator 30 arranged below. Therefore, frozen sake A can be supplied to the separator 30 successively from the cylinder 70 and the apparatus can be applied to an automatic process.

In concentrated sake C obtained as described above, the components which are originally included in sake, such as alcohol, extract contents, enzymes, amino-acids and flavor components, are concentrated by 1.5 times to 2 times or more.

Moreover, sake C obtained as described above, which has a high alcoholicity, can be stored (aged) withoutdeterioration. Moreover, since sake C is stored at room temperature, the progress of aging can be hastened.

Furthermore, concentrated sake C, for which sake made of raw material sake that is not pasteurized is used, also enzyme activity is high and high-quality (for example, mild taste, pleasant flavor, little stimulation of alcohol, and the like) aging can be performed.

It should be noted that the separator 30 mentioned above is a novel apparatus regardless of concentration of sake (liquor). Accordingly, the centrifugal separator described in Claim 13 can also be applied for other uses (Claim 6).

### [Fourth Embodiment]

The fourth embodiment of the present invention will be described in detail with reference to the appropriate drawings. It should be noted that, since the structure of the fourth embodiment is partially modified from that of the separator for the first embodiment, the same symbols are used to refer to same components and description thereof will be described.

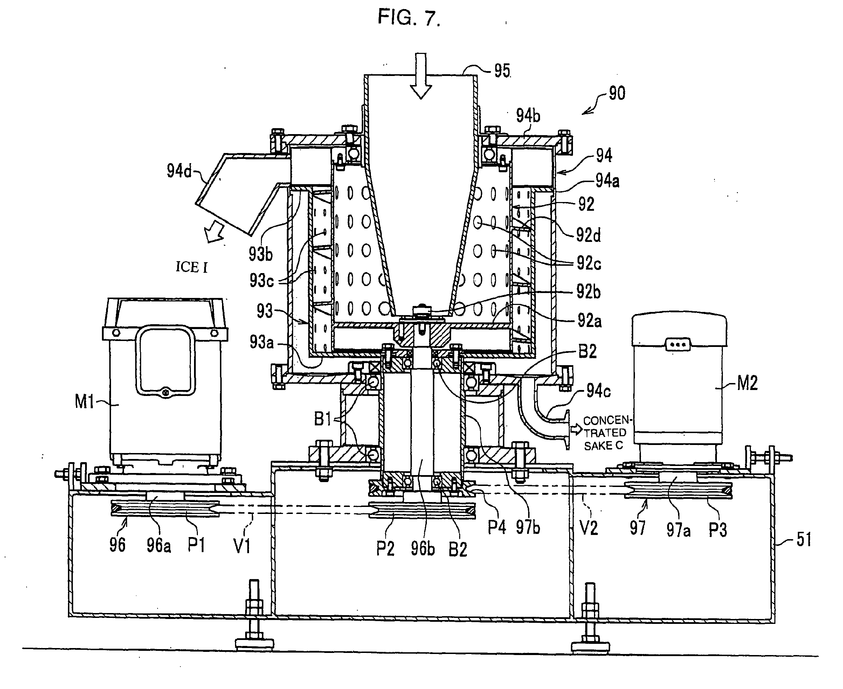

A concentrator of sake (which will be hereinafter referred to simply as "a concentrator") according to the present embodiment is composed of: a freezing chamber 10 for freezing sake A, which is the raw material, supplied from the raw material tank T; and a solid-liquid separation chamber 20 comprising a separator 90 for separating frozen sake A into ice I composed of water content and concentrated sake C (see Fig. 1 and Fig. 7) .

Fig. 7 is a sectional view of a separator.

As shown in Fig. 7, the separator 90 is composed of: two motors M1 and M2; an internal basket 92 to which rotation is transmitted from the motor M1 via a rotation transmitting mechanism 96 (second rotation transmitting mechanism); an external basket 93 to which rotation is transmitted from the motor M2 via a rotation transmitting mechanism 97 (first rotation transmitting mechanism) ; and a housing container 94 for housing the internal basket 92 and the external basket 93 at the inside thereof. The housing container 94 and the motors M1 and M2 are fastened to a base 51.

At the separator 90, solid-liquid separation into ice I and concentrated sake C can be performed for sake A in the housing container 94 utilizing a dewatering effect of centrifugal separation.

The internal basket 92 is made of material such as stainless steel (SUS) and formed in a cylindrical shape having a bottom face 92a. A machined edge 92b is provided at the bottom face of an internal center of the internal basket 92 so as to grind icy sake A introduced from an introduction portion 95 which will be described later into small pieces. Moreover, a plurality of pores 92c having a diameter of approximately 10 mm are provided at a side face of the internal basket 92 so that ground small ice I of sake A can be discharged to the outside of the internal basket 92, i.e. the external basket 93 side which will be described later. Furthermore, a spiral edge 92d is formed at the outer side face of the internal basket 92.

The external basket 93 made of, for example, stainless steel or the like is arranged outside the internal basket 92 so that a slight clearance is provided between the internal basket 92 and the edge 92d. The external basket 93 is formed in a cylindrical shape having a bottom face 93a, and a flange 93b is provided at the upper portion thereof. Small pores 93c for discharging concentrated sake C to the housing container 94 side are provided at the side face of the external basket 93. The pores 93c are formed to have a diameter smaller than or equal to 1.0 mm, or preferably approximately 0.4 mm, when the internal basket 92 and the external basket 93 are rotated at an equal rate in solid-liquid separation of sake A, or preferably formed to have a diameter of approximately 0.05 mm when the baskets are rotated at differential rate. Incidentally, it is thought that a wall of remaining ground sake ice (ice I) is formed at the inner periphery face of the external basket 93 and this wall performs a filtering effect (so-called "cake filtration") in a case of rotation at an equal speed. It should be noted that the size of the pores 92c and 93c to be provided at the side face of the internal basket 92 and the external basket 93 is not limited to the above-described diameters and arbitrary modification can be made, as long as the pores 92c are larger.

The housing container 94 has a container body 94a, a container cover 94b, a liquid discharge pipe 94c arranged at a lower portion of the container body 94a, and an ice outlet 94d arranged at an upper side portion of the container body 94a.

The introduction portion 95 is arranged at the internal center of the container body 94a and fastened to the container cover 94b, the internal basket 92 is arranged outside the introduction portion 95 and the external basket 93 is arranged outside the internal basket 92. Sake A introduced from the introduction portion 95 is ground by the machined edge 92b in the internal basket 92 into small pieces and discharged to the external basket 93. In such a manner, only sake C concentrated in the external basket 93 is further discharged to the housing container 94 (outside of the external basket 43) so as to be separated from ice I.

The introduction portion 95 is made of a cylinder member and is fastened to the container cover 94b so as to be arranged at the center of the container body 94a. Since the introduction portion 95 is constructed to receive sake A, which has been detached from the detaching means 14 (see Fig. 1) and supplied, and introduce sake A to the internal basket 92 , a slight clearance is provided at the lower portion of the introduction portion 95 and the bottom face of the internal basket 42.

The housing container 94 is fastened to the center upper portion of the base 51 with a bolt or the like, and the motors M1 and M2 are arranged at and fastened to the ends thereof. Moreover, the rotation transmitting mechanism 96 for transmitting rotation from the motor M1 to the internal basket 92 and the rotation transmitting mechanism 97 for transmitting rotation from the motor M2 to the external basket 93 are provided inside the base 51.

The rotation transmitting mechanism 96 is composed of: a rotation transmitting shaft 96a connected directly with the rotating shaft of the motor M1; a pulley P1 fastened to this rotation transmitting shaft 96a; an internal basket rotating shaft 96b fastened to the center portion of the bottom face 92a of the internal basket 92; a pulley P2 fastened to this internal basket rotating shaft 96b; and a timing belt V1 wound around the pulley P1 and the pulley P2. At the rotation transmitting mechanism 9 6, when the motor M1 is driven, rotation of the rotation transmitting shaft 96a connected directly with the rotating shaft thereof is transmitted to the internal basket 92 via the pulley P1, the timing belt V1, the pulley P2 and the internal basket rotating shaft 96b.

Moreover, the rotation transmitting mechanism 97 is composed of: a rotation transmitting shaft 97a connected directly with the rotating shaft of the motor M2; a pulley P3 fastened to this rotation transmitting shaft 97a; an external basket rotating shaft 97b fastened to the center portion of the bottom face 93a of the external basket 93; a pulley P4 fastened to this external basket rotating shaft 97b; and a timing belt V2 wound in the vicinity of the pulley P3 and the pulley P4. At the rotation transmitting mechanism 97, when the motor M2 is driven, rotation of the rotation transmitting shaft 97a connected directly with the rotating shaft thereof is transmitted to the external basket 93 via the pulley P3, the timing belt V2, the pulley P4 and the external basket rotating shaft 97b.

It should be noted that the external basket rotating shaft 97b fastened to the external basket 93 is formed in a cylindrical shape and is supported to the housing container 94 and the base 51 via a bearing B1 so as to be rotatable. Moreover, the internal basket rotating shaft 96b fastened to the internal basket 92 is arranged inside the external basket rotating shaft 97b and supported to this external basket rotating shaft 97b via a bearing B2 so as to be rotatable.

The internal basket 92 and the external basket 93 rotated by drive of these motors M1 and M2 may be rotated at an equal rate or at a differential rate.

It should be noted that, in discharge of ice I, ice I of sake A discharged from the pores 92c of the internal basket 92 can be moved upward at the edge 92d of the internal basket 92 in the external basket 93 and discharged from the ice outlet 94d via above the flange 93b, since the internal basket 92 and the external basket 93 have a different number of rotations.

A description will be made for the operation of the concentrator constructed as described above. It should be noted that, since operation before introduction of frozen sake A to the introduction portion 95 is the same as the first embodiment described above, description thereof will be omitted.

First, as shown in Fig. 7, the motor M1 and the motor M2 are driven to rotate the internal basket 92 and the external basket 93. The motor M1 and the motor M2 are synchronous motors and both are rotated at 1,800 rpm (rotation at an equal rate) in the present embodiment. Sake A frozen in the freezing chamber 10 (see Fig. 1) is introduced from the introduction portion 95. Introduced sake A is ground by the machined edge 92b in the rotated internal basket 92 and discharged from the pores 92c to the external basket 93 side. In the external basket 93, sake C concentrated by centrifugal separation from frozen sake A is discharged from the pores 93c to the housing container 94 side and finally discharged from the liquid discharge pipe 94c. It should be noted that the motor M1 and the motor M2 are controlled separately to rotate the internal basket 92 at 300 rpm and the external basket 93 at 290 rpm, for discharging ice I. Since the internal basket 92 and the external basket 93 thus have a different number of rotations, ice I is conveyed to an upper portion at the edge 92d of the internal basket 92 and discharged from the ice outlet 94d. Moreover, the alcohol concentration can be enhanced effectively by decreasing the number of rotations to lower the centrifugal force so that ice I is kept from getting to the housing container 94 side from the external basket 93.

It should be noted that, since the internal basket 92 and the external basket 93 are rotated at an equal speed in solid-liquid separation of sake A in the present embodiment, discharge of remaining ice (to convey ice I to an upper portion of the external basket 93) cannot be performed simultaneously, and therefore frozen sake A cannot be introduced successively. Therefore, the present embodiment is different from the first embodiment in that a known conveying method in the art, for example, a volumetric conveying means for conveying frozen sake A according to the process, is used for introducing frozen sake A through the introduction portion 95 intermittently.

With the structure described above, the following effects can be obtained with the fourth embodiment.

In the separator 90, solid-liquid separation can be performed utilizing a dewatering effect of centrifugal separation and ice I and the like can be discharged to the outside automatically and successively, the production efficiency is high, and the apparatus is suitable for use in an automatic process.

Moreover, since the internal basket 92 and the external basket 93 are rotated by separate motors M1 and M2, it is possible to control the respective rotation easily and to simplify the structure of the rotation transmitting mechanisms 96 and 97.

In concentrated sake C obtained as described above, the components which are originally included in sake, such as alcohol, sugars, amino-acids and enzymes, are concentrated by 1.5 times or more.

Moreover, sake C obtained as described above, which has a high alcoholicity larger than or equal to 30 degrees, can be stored (aged) at room temperature without deterioration. Moreover, since sake C is stored at room temperature, the progress of aging can be hastened.

Furthermore, concentrated sake C, for which sake made of raw material sake that is not pasteurized is used, also enzyme activity is high and high-quality (for example, mild taste, pleasant flavor, little stimulation of alcohol, and the like) aging can be performed.

It should be noted that the separator 90 described above is a novel apparatus regardless of concentration of sake (liquor) . Accordingly, the centrifugal separator described in Claim 14 can also be applied for other uses (Claim 7).

Moreover, although a case of concentration of sake has been described in the above embodiment, the present invention may also be applied to a case of concentration of liquor having the same concentration.

### Examples

### [Example 1]

The description will be made for the present invention in further detail on the basis of Example 1. In the present example, the concentrator described in the fourth embodiment (i.e. concentrator comprising the separator 90) was used to produce sake concentrated by the manufacturing method described in the first embodiment. The extract characteristic of alcohol by the freezing temperature and the separation temperature was measured and the result is shown in Table 1 . It should be noted that the present invention is not limited to the following example.

In this measurement test, sake of 10,000 ml having an alcoholicity of 18.3 degrees was used as the raw material sake and both of the internal basket 92 and the external basket 93 were set into rotation at an equal rate of 1,800 rpm to perform separation by centrifugal force of 544 G at the separator 90.

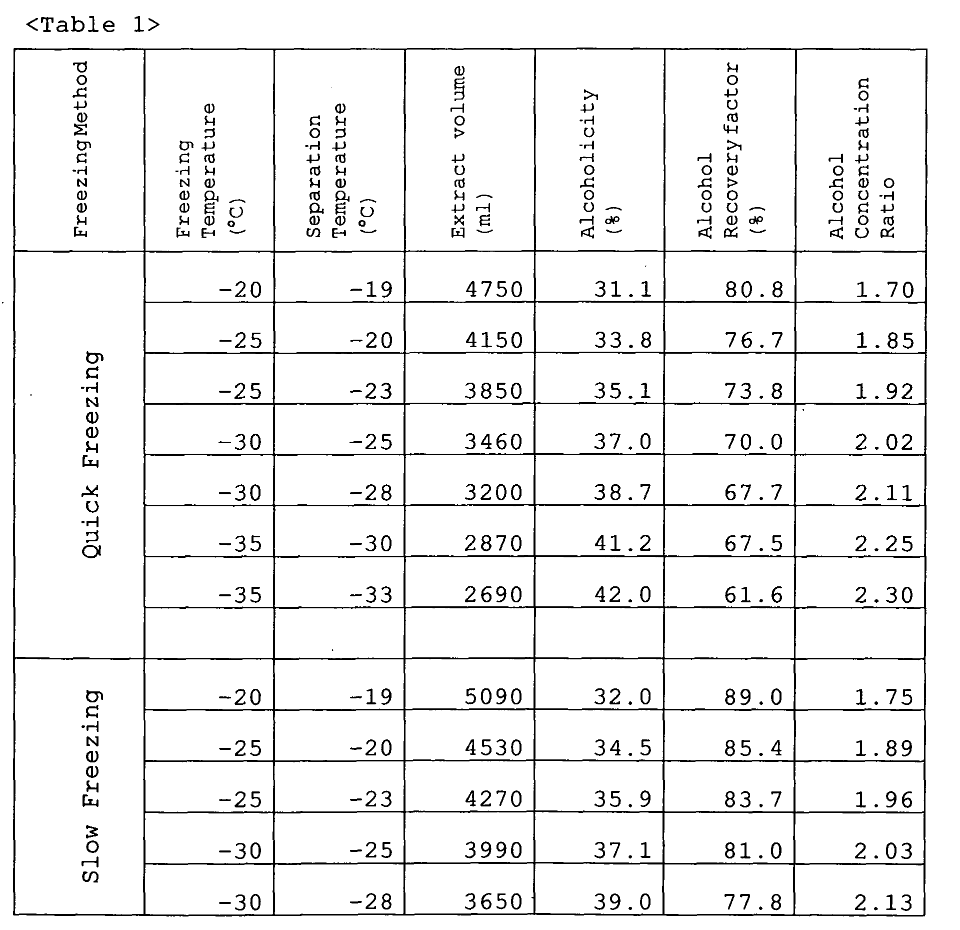

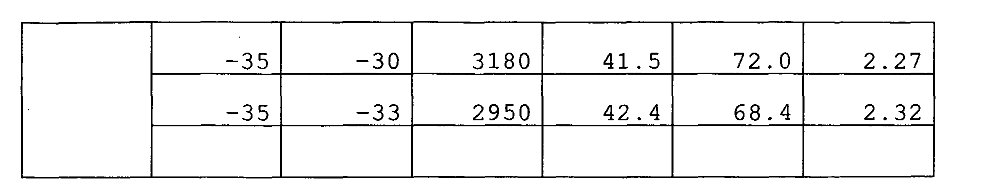

Here, the "freezing temperature" is a temperature of when sake A is frozen and the "separation temperature" is a temperature of when sake A is separated into ice I and concentrated sake C. The separation temperature is set within a range of + 5°C of the freezing temperature. Moreover, the "quick freezing" means a case of freezing quickly and the "slow freezing" means a case of freezing slowly at a rate of 1°C per hour.

A description will be made for the result of this measurement test.

First, as shown in Table 1, it is found that all the alcoholicity of sake obtained by this method is over 30 degrees.

It is also found that the alcoholicity and the alcohol concentration ratio become higher as the freezing temperature is lower. In particular, it was found that the alcohol concentration ratio was 2 times or more at a freezing temperature lower than or equal to -30°C in either case of quick freezing and slow freezing. On the other hand, the extract and the alcohol recovery factor became lower as the freezing temperature and the separation temperature were lower.

Moreover, for the same freezing temperature, it is found that the concentration ratio is higher in a case of separation at a separation temperature closer to the freezing temperature. In particular, in quick freezing at a freezing temperature of -25 °C, the alcohol concentration ratio of a separation temperature of -23°C is higher than that of -20°C.

It should be noted that it was found that the alcohol recovery factor of slow freezing was higher than that of quick freezing. Accordingly, although it is found that slow freezing is superior to quick freezing in order to increase the alcohol recovery factor and the like, quick freezing is more favorable for production in a short period of time to increase the productivity.

Next, the component characteristic by the freezing temperature and the separation temperature was measured and the result is shown in Table 2.

In the present measurement test, a saccharimeter manufactured by Atago Co., Ltd. was used for sugar content measurement, a formol titrationmethodwas used for an amino-acid content measurement, a neutralization method was used for an acidity measurement, and a measurement kit manufactured by Kikkoman Corporation was used for enzyme A (acid carboxypeptidase) and enzyme B (glucoamylase + a-glucosidase) .

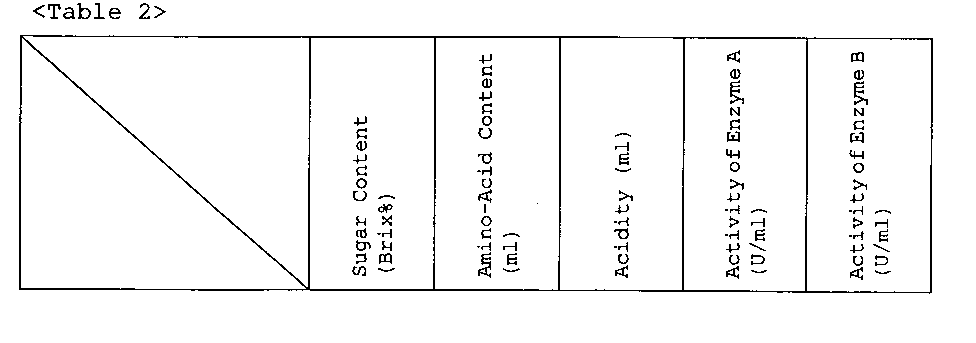

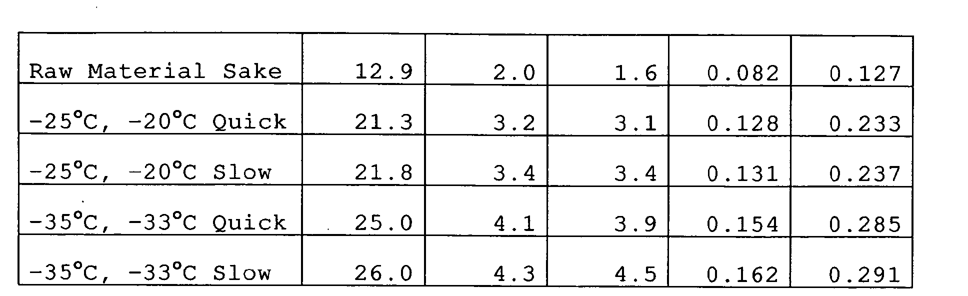

Temperatures described in the first column of each line are a freezing temperature shown on the left side and a separation temperature shown on the right side.

A description will be made for the result of this measurement test.

As shown in Table 2, it is found that all sake obtained in the present example has a component concentrated by 1.5 times or more with respect to the raw material sake. Moreover, for the same conditions of a freezing temperature and a separation temperature, it is found that each type of component can be increased by slow freezing more than by quick freezing. For example, in a case of a freezing temperature of -35°C and a separation temperature of -33 °C, slow freezing gives more sugar content of 1.0 Brix %, more amino-acid content of 0.2 ml, more acidity of 0.6 ml, more activity of enzyme A of 0.008 U/ml and more activity of enzyme B of 0.006 U/ml.

### Industrial Applicability

Concentrated sake described in Claim 1 is concentrated sake having an alcoholicity of 30 - 50 degrees, which is obtained by freezing sake that is the raw material uniformly and then separating the water content at a temperature close to the freezing temperature. Since sake obtained in such a manner has a concentration ratio higher than or equal to 1.59 times and an alcoholicity larger than or equal to 30 degrees, high-quality aging at room temperature is enabled.

With the manufacturing method for concentrated sake described in Claim 2, sake is frozen uniformly at a predetermined temperature between -20°C and -40°C and then water content is separated forcibly at a separation temperature higher than or equal to the predetermined temperature, so that sake concentrated to an alcoholicity of 30 - 50 degrees can be manufactured.

With the manufacturing method for concentrated sake described in Claim 3, since sake is frozen in a thin layer state at a predetermined temperature between -20°C and -40°C, uniform freezing can be achieved.

With the manufacturing method for concentrated sake described in Claim 4, since slow cooling is employed, the recovery factor of alcohol, extract content and the like is high and it is possible to obtain high-quality concentrated sake.

With the manufacturing method for concentrated sake described in Claim 5, since sake can be separated into the water content and concentrated sake by the effect of centrifugal separation, separation can be promoted more efficiently than by spontaneous separation.

With the centrifugal separator for an obj ect to be treated described in Claim 6, the object to be treated is discharged from the large diameter pores to the external basket side by the effect of centrifugal separation in the internal basket to be rotated by drive of the motor. Moreover, solid-liquid separation is also promoted by the effect of centrifugal separation in the external basket. The separated solid body is conveyed upward in the external basket by the edge of the internal basket and discharged from the solid outlet to the outside. Moreover, the separated liquid part is discharged from the small diameter pores to the outside of the external basket as a concentrated object to be treated.

With the centrifugal separator for an obj ect to be treated described in Claim 7, the object to be treated is discharged from the large diameter pores to the external basket side by the effect of centrifugal separation in the internal basket to be rotated by drive of one motor via the first rotation transmitting mechanism. Moreover, solid-liquid separation is also promoted by the effect of centrifugal separation in the external basket to be rotated by drive of the other motor via the second rotation transmitting mechanism. The separated solid body is conveyed upward in the external basket by the edge of the internal basket and discharged from the solid outlet to the outside. Moreover, the separated liquid part is discharged from the small diameter pores to the outside of the external basket as a concentrated object to be treated. It should be noted that the rotation of the external basket of the internal basket may be a rotation at an equal rate or rotation at a differential rate. Since the internal basket and the external basket are driven by different motors, it is possible to control the respective rotation easily and to simplify the structure of the rotation transmitting mechanisms.

The concentrator of liquor described in Claim 8 is an apparatus for realizing the manufacturing method for the concentrated sake. It is possible to freeze liquor at the freezing chamber and to separate frozen liquor into ice composed of water content and concentrated liquor by the centrifugal separator.

With the concentrator of liquor described in Claim 9, since liquor is conveyed in the freezing chamber, it is possible to promote freezing in the meantime. Moreover, since sake frozen on the tray can be detached by the detaching means, manual work is not included and the apparatus is suitable for industrial production. Furthermore, the concentrator of liquor described in Claim 9 can be used for the manufacturing method for sake described in Claim 3 by sequentially supplying liquor to the conveyed tray in a thin film state (having a thickness of 3 mm - 15 mm). Moreover, the apparatus can be used for the manufacturing method for sake described in Claim 4 by supplying liquor to all trays to have a large thickness (thickness of 20 mm - 40 mm), once stopping conveyance and cooling liquor at a predetermined cooling rate.

With the concentrator of liquor described in Claim 10, since the partition plate partitions the tray into a plurality of partitions, the cooling effect is enhanced and it is possible to freeze sake stored in the tray quickly and uniformly. Moreover, since the partition plate partitions the tray into a plurality of partitions, the sealing level is enhanced. Furthermore, the frozen sake detached from the tray, which has a small block-like shape, can be supplied to the centrifugal separator easily.

With the concentrator of liquor described in Claim 11, the internal cylinder having a spiral edge at the outer periphery is rotated, so that liquor introduced from the liquor inlet provided at one end portion to the space between the external cylinder and the internal cylinder can be moved toward the other end portion. Sake is frozen in the meantime and frozen sake can be discharged automatically from the other end portion. With such a manner, it is possible to utilize the space in the freezing space effectively and to form a small freezing chamber.

With the concentrator of liquor described in Claim 12, the storing means rotates the internal cylinder having a spiral edge at the outer periphery so as to move liquor, which is introduced from the liquor inlet provided at one end portion to the space between the external cylinder and the internal cylinder, toward the other end portion. The outside of the external cylinder and the inside of the internal cylinder of the storing means are dipped in the antifreezing solution cooled to a predetermined temperature, so that liquor is frozen in a short period of time while moving in the storing means and frozen liquor can be discharged automatically from the other end portion. In the solid-liquid separation chamber maintained at a predetermined temperature, liquor discharged automatically is separated into water content and concentrated liquor by the centrifugal separator.

With the concentrator of liquor described in Claim 13, frozen sake is discharged from the large diameter pores to the external basket side by the effect of centrifugal separation in the internal basket rotated by drive of the motor. Moreover, the solid-liquid separation is also promoted by the effect of centrifugal separation in the external basket. The separated solid body is conveyed by the edge upward in the external basket and discharged from the solid outlet to the outside. Moreover, the separated liquid part is discharged from the small diameter pores to the housing container side (outside of the external basket) as concentrated liquor.

With the concentrator of liquor described in Claim 14, frozen sake is discharged from the large diameter pores to the external basket side by the effect of centrifugal separation in the internal basket which is rotated by drive of one motor via the first rotation transmitting mechanism. Moreover, the solid-liquid separation is also promoted by the effect of centrifugal separation in the external basket which is rotated by drive of the other motor via the second rotation transmitting mechanism. The separated solid body is conveyed by the edge upward in the external basket and discharged from the solid outlet to the outside. Moreover, the separated liquid part is discharged from the small diameter pores to the housing container side (outside of the external basket) as concentrated liquor.

## Claims

1. Sake, which is concentrated to an alcoholicity of 30 - 50 degrees by freezing the same uniformly and then separating the water content, wherein a concentration ratio is higher than or equal to 1.59 times.

2. A manufacturing method for sake which is concentrated to an alcoholicity of 30 - 50 degrees by a ratio higher than or equal to 1.59 times without damaging intrinsic components of sake, comprising the steps of:
(a) freezing the sake by cooling the same uniformly to a predetermined temperature between -20°C and -40°C; and
(b) separating the frozen sake forcibly into water content and concentrated sake at a temperature higher than the predetermined temperature.

3. The manufacturing method for concentrated sake according to Claim 2, wherein the sake is cooled quickly in a thin layer state in a cooling atmosphere of a predetermined temperature between -20°C and -40°C.

4. The manufacturing method for concentrated sake according to Claim 3, wherein the sake is cooled slowly at a cooling rate of 0.5 - 2 °C/h to a predetermined temperature between -20°C and -40°C.

5. The manufacturing method for concentrated sake according to any one of Claims 2 to 4, wherein the frozen sake is separated into the water content and the concentrated sake by centrifugal separation.

6. A centrifugal separator for an object to be treated for separating the obj ect to be treated into a solid body and liquid, comprising:
a motor;
an internal basket which has large diameter pores at the outer periphery and has a spiral edge;
an external basket which has small diameter pores at the outer periphery and is arranged outside the internal basket;
a housing container for housing the external basket and the internal basket;
a solid outlet which is provided in the vicinity of a side face upper portion of the external basket; and
a rotation transmitting mechanism for transmitting rotation respectively to the external basket and the internal basket while varying a rotation transmission ratio of the motor,
wherein the obj ect to be treated introduced to the internal basket is discharged from the large diameter pores to the external basket, the solid body extracted from the object to be treated is conveyed at the edge of the internal basket to an upper portion and discharged from the solid outlet to the outside at the external basket, and liquid extracted from the obj ect to be treated is discharged from the small diameter pores to the housing container.

7. A centrifugal separator for an object to be treated for separating the obj ect to be treated into a solid body and liquid, comprising:
two motors;
an internal basket which has large diameter pores at the outer periphery and has a spiral edge;
an external basket which has small diameter pores at the outer periphery and is arranged outside the internal basket;
a housing container for housing the external basket and the internal basket;
a solid outlet which is provided in the vicinity of a side face upper portion of the external basket; and
a first rotation transmitting mechanism for transmitting rotation of one motor to the external basket and a second rotation transmitting mechanism for transmitting rotation of the other motor to the internal basket,
wherein the obj ect to be treated introduced to the internal basket is discharged from the large diameter pores to the external basket, a solid body extracted from the object to be treated is conveyed at the edge of the internal basket to an upper portion and discharged from the solid outlet to the outside at the external basket, and liquid extracted from the object to be treated is discharged from the small diameter pores to the housing container.

8. A concentrator of liquor, comprising: a freezing chamber which has a liquor inlet and has cooling means for cooling liquor to a predetermined temperature for freezing; and a solid-liquid separation chamber, which has a centrifugal separator for separating the liquor frozen at the freezing chamber into water content and concentrated liquor, for maintaining a temperature of the centrifugal separator at a temperature close to or equal to a predetermined temperature.

9. The concentrator of liquor according to Claim 8, wherein the freezing chamber has: a tray for storing the liquor; conveying means for conveying the tray; and detaching means for detaching the frozen liquor from the conveyed tray.

10. The concentrator of liquor according to Claim 9, having a cover for sealing the tray, wherein a partition plate for partitioning the tray into a plurality of partitions is formed inside the cover.

11. The concentrator of liquor according to Claim 8, wherein the freezing chamber has: an external cylinder having the liquor inlet at one end portion; an internal cylinder which is provided inside the external cylinder and has a spiral edge at the outer periphery; and a motor for rotating the internal cylinder, and the internal cylinder is rotated by drive of the motor so that the liquor introduced from the liquor inlet to a space between the external cylinder and the internal cylinder can be discharged from the other end portion of the external cylinder.

12. A concentrator of liquor comprising: storing means for storing liquor in a solid-liquid separation chamber maintained at a predetermined temperature; antifreezing solution cooled to a predetermined temperature for soaking the storing means and freezing liquor; and a centrifugal separator for separating the liquor frozen by the antifreezing solution into water content and concentrated liquor, wherein
the storingmeans has: an external cylinder having a liquor inlet at one end portion; an internal cylinder which is provided inside the external cylinder and has a spiral edge at the outer periphery; and a motor for rotating the internal cylinder, and the internal cylinder is rotated by drive of the motor so that the liquor introduced from the liquor inlet to a space between the external cylinder and the internal cylinder can be discharged from the other end portion of the external cylinder.

13. The concentrator of liquor according to any one of Claims 8 to 12, wherein the centrifugal separator comprises:
a motor;
an internal basket which has large diameter pores at the outer periphery and has a spiral edge;
an external basket which has small diameter pores at the outer periphery and is arranged outside the internal basket;
a housing container for housing the external basket and the internal basket;
a solid outlet which is provided in the vicinity of a side face upper portion of the external basket; and
a rotation transmitting mechanism for transmitting rotation respectively to the external basket and the internal basket while varying a rotation transmission ratio of the motor,
the liquor introduced to the internal basket is discharged from the large diameter pores to the external basket, a solid body extracted from the liquor is conveyed at the edge of the internal basket to an upper portion and discharged from the solid outlet to the outside at the external basket, and liquid extracted from the object to be treated is discharged from the small diameter pores to the housing container.

14. The concentrator of liquor according to any one of Claims 8 to 12, wherein the centrifugal separator comprises:
two motors;
an internal basket which has large diameter pores at the outer periphery and has a spiral edge;
an external basket which has small diameter pores at the outer periphery and is arranged outside the internal basket;
a housing container for housing the external basket and the internal basket;
a solid outlet which is provided in the vicinity of a side face upper portion of the external basket; and
a first rotation transmitting mechanism for transmitting rotation of one motor to the external basket and a second rotation transmitting mechanism for transmitting rotation of the other motor to the internal basket,
the object to be treated introduced to the internal basket is discharged from the large diameter pores to the external basket, a solid body extracted from the object to be treated is conveyed at the edge of the internal basket to an upper portion and discharged from the solid outlet to the outside at the external basket, and liquid extracted from the object to be treated is discharged from the small diameter pores to the housing container.
